# EUROPÄISCHE PATENTSCHRIFT

(11) **EP 4 463 405 B1**
(45) Veröffentlichungstag und Bekanntmachung des Hinweises auf die Patenterteilung: **17.12.2025**
(21) Anmeldenummer: 22844218.2
(22) Anmeldetag: 28.12.2022
(51) Int. Cl.: B65G 15/10, B26D 7/32, B65G 47/244, B65G 47/248

(54) **VORRICHTUNG ZUM TRANSPORTIEREN UND FALTEN VON LEBENSMITTELSCHEIBEN**
APPARATUS FOR CONVEYING AND FOLDING SLICES OF FOOD
APPAREIL POUR TRANSPORTER ET PLIER DES TRANCHES D'ALIMENTS

(30) Priorität: 13.01.2022 DE 102022200331
(43) Veröffentlichungstag der Anmeldung: 20.11.2024
(73) Patentinhaber: GEA Food Solutions Germany GmbH, 35216 Biedenkopf-Wallau (DE)
(72) Erfinder: HETTINGA, Arjen, 8772 KL Tjalhuizum (NL); GÜZEL, Nihat, 87437 Kempten (DE)
(74) Vertreter: Kutzenberger Wolff & Partner
(86) Internationale Anmeldenummer: PCT/EP2022/087944
(87) Internationale Veröffentlichungsnummer: WO 2023/135018

(56) Entgegenhaltungen:
- WO-A1-2017/089242
- DE-B4- 102013 100 782
- JP-A- 2017 149 523
- US-A- 6 098 783

## Beschreibung

### Stand der Technik

Die vorliegende Erfindung geht aus von einer Vorrichtung zum Transportieren von Lebensmittelscheiben mit einem Bandförderer, der eine Förderebene definiert, in welcher Lebensmittelscheiben entlang einer Hauptförderrichtung transportiert werden, und wenigstens zwei Förderriemen umfasst.

Bei derartigen Vorrichtungen - sogenannten "Slicern" - werden stangenförmige Lebensmittelprodukte, beispielsweise Wurst oder Käse, mit einer hohen Schnittleistung, beispielsweise mit bis zu 1.000 Schnitten pro Minute, in Scheiben geschnitten. Dabei werden die Lebensmittelprodukte einspurig, d.h. einzeln, oder mehrspurig, d.h. parallel zueinander, mittels einer Zuführeinheit zu einer Schneidebene im Bereich eines Schneidelements transportiert. In der Schneidebene werden die Lebensmittelprodukte durch das Schneidelement, insbesondere ein rotierendes Kreis- oder Sichelmesser, in Scheiben geschnitten. Die Scheibenstärke ergibt sich aus dem Vorschub der einzelnen Lebensmittelprodukte zwischen zwei Schnitten. Die geschnittenen Scheiben werden in der Regel mit konstanter Scheibenzahl und/oder gewichtsgenau zu Portionen angeordnet und verpackt. Ein solcher Slicer ist beispielsweise aus der Druckschrift WO 2017 / 089 242 A1 , der den Oberbegriff des Anspruchs 1 offenbart, bekannt.

Innerhalb der Verpackung werden die Scheiben in einer gewünschten Ausgestaltung und Anordnung abgelegt, wobei eine Vielzahl von Konfigurationen durch den Slicer realisiert werden können. Eine gewünschte geschindelte Anordnung kann beispielsweise durch stetige Bewegung der Förderriemen während des Schneidprozesses herbeigeführt werden, sodass unmittelbar aneinander angrenzende Scheiben beabstandet und teilweise überlappend angeordnet sind. Alternativ kann eine Abführeinheit, auf der die geschnittenen Scheiben vollends überlappend aufgestapelt werden, zumindest teilweise vertikal bewegbar ausgeführt sein. Zudem können Abführeinheiten derart konfiguriert sein, dass sie auch quer zur Hauptförderrichtung bewegbar sind und hierdurch komplexere Anordnungen der Lebensmittelscheiben realisiert werden können. So können beispielsweise ovale, runde, herzförmige, mehrreihige etc. Scheibenanordnungen verwirklicht werden. Derartige Slicer können jedoch eine präzise zeitliche Abstimmung der Bewegungen einzelner Slicerkomponenten aufeinander sowie eine höhere Zahl an Bewegungsfreiheitsgraden in alle drei Raumrichtungen erfordern, um Kundenanforderungen im Hinblick auf Verpackungsanordnungen der Scheiben gerecht zu werden. Ferner kann mit den im Stand der Technik offenbarten Slicern keine besonders ästhetische und vollends neuartige Lebensmittelkonfiguration realisiert werden.

Die Druckschrift JP 2017149523 A offenbart ferner eine Vorrichtung zum Ausrichten von Lebensmittelprodukten auf einem Förderband, während aus der Druckschrift DE 10 2013 100 782 B4 ein verschiebbarer Stopperzylinder zum Stoppen von Produkten auf einer Förderlinie bekannt ist.

### Offenbarung der Erfindung

Es ist eine Aufgabe der vorliegenden Erfindung eine Vorrichtung zum Transportieren und Falten von Lebensmittelprodukten zur Verfügung zu stellen, welche den im Zusammenhang mit dem Stand der Technik beschriebenen Nachteil nicht aufweist und insbesondere komplexe Bewegungen der Slicerkomponenten, insbesondere der Abführeinheit, umgeht. Des Weiteren und vor allem wird erfindungsgemäß eine neue, optisch ansprechende Lebensmittelkonfiguration bereitgestellt, die zudem ermöglicht, dass die Lebensmittelscheiben aufgrund ihrer speziellen Faltung manuell einfach greifbar werden.

Die Aufgabe der vorliegenden Erfindung wird gelöst durch eine Vorrichtung nach Anspruch 1.

Erfindungsgemäß weist die Vorrichtung eine Faltvorrichtung auf, welche zwischen den Förderriemen in die Förderebene vorsteht. Bevorzugt wird ein Zwischenriemen zwischen den Förderriemen angeordnet, wobei der Förderriemen von der Faltvorrichtung angehoben wird. Durch das Vorstehen der Faltvorrichtung und des Zwischenriemens über die Förderebene können insbesondere infolge von Bewegung der Lebensmittelscheiben über die Faltvorrichtung hinweg und entlang eines Durchmessers der Faltvorrichtung die Lebensmittelscheiben angehoben werden, wodurch jeweils eine Längsfalte in den Lebensmittelscheiben erzeugt werden. Nach Durchlaufen der Faltvorrichtung heben die Lebensmittelscheiben zumindest kurzzeitig und/oder teilweise von dem Zwischenriemen ab und landen stromabwärts der Faltvorrichtung auf einem Bandförderer oder einem dem Bandförderer nachgeschalteten weiteren Bandförderer. Der weitere Bandförderer weist eine geringere Fördergeschwindigkeit auf als der Bandförderer, sodass die Lebensmittelscheiben abgebremst werden und zusätzlich zur Längsfalte mehrere Querfalten pro Lebensmittelscheibe entstehen. Die Faltvorrichtung kann für jeden Schneid- und Faltprozess stationär, d.h. ortsfest betrieben werden. Der Bandförderer und/oder die Faltvorrichtung müssen also nicht in alle drei Raumrichtungen bewegbar sein, um eine gewünschte Geometrie, Faltung oder Anordnung der Lebensmittelscheiben zu erzielen.

Erfindungsgemäß ist zwischen den Förderriemen ein Zwischenriemen vorgesehen, welcher von der Faltvorrichtung über die Förderebene angehoben wird. Als Zwischenriemen eignen sich insbesondere umlaufende Riemen mit einem kreisförmigen, rechteckigen, ovalen oder anders gestalteten Querschnitt. Denkbar sind auch Keil- oder Zahnriemen. Ferner können die Riemen aus einem Kunststoff wie Polyamid, Polyester oder Aramid hergestellt sein und optional Kunststofffasern oder Stahldrähte umfassen. Der Zwischenriemen kann als Bestandteil der Faltvorrichtung betrachtet werden und erweitert gleichsam die Aktionsreichweite der Faltvorrichtung, wobei unter Zuhilfenahme des Zwischenriemens der Faltvorgang allmählich statt abrupt erfolgen kann.

In einer bevorzugten Ausgestaltung ist vorgesehen, dass die Faltvorrichtung in eine Arbeitsstellung, in welcher die Faltvorrichtung zwischen den Förderriemen in die Förderebene vorsteht, und eine Nichtgebrauchsstellung, in welcher die Faltvorrichtung unterhalb der Förderebene angeordnet ist, bewegbar und insbesondere verschwenkbar ist. Die Förderebene kann definiert werden als eine Ebene, welche die parallel angeordneten Oberflächen der Förderriemen umfasst. Ein beliebiges Maß an Hervorstehen der Faltvorrichtung über die Förderebene hinaus fungiert als Erhabenheit der Förderebene und dient zur Faltung der Lebensmittelscheiben, die vom Bandförderer zur Faltung über eben diese Erhabenheit geführt werden. Durch ein höheres Maß an Hervorstehen kann eine ausgeprägtere Faltung der Lebensmittelscheiben erzielt werden, wobei ein maximales Faltungsmaß erreicht ist, wenn die Lebensmittelscheiben mittels der Faltvorrichtung in einem derart großen Umfang angehoben sind, dass zwischen der Lebensmittelscheibe und dem Bandförderer kein physischer Kontakt mehr gegeben ist. In der Arbeitsstellung erreicht die Faltvorrichtung das maximale Maß an Hervorstehen über die Förderebene. Bei Abschaltung des Slicers hingegen kann die Faltvorrichtung unter die Förderebene - in die Nichtgebrauchsstellung - bewegt werden, sodass die Erhabenheit der Förderebene eliminiert wird. Denkbar ist, dass die Faltvorrichtung senkrecht zur und durch die Förderebene in einen Transportweg bewegt wird. Ebenfalls denkbar ist ein Schwenken der Faltvorrichtung in den Transportweg der Lebensmittelscheiben.

Erfindungsgemäß umfasst die Faltvorrichtung eine Rolle, auf welcher der Zwischenriemen abläuft. Denkbar ist eine drehstarre Befestigung der Rolle an der Faltvorrichtung. Ferner kann die Rolle drehbar an der Faltvorrichtung gelagert werden. Eine feste Lagerung der Rolle kann infolge der von ihr erzeugten Erhabenheit die gewünschte Faltung herbeiführen, die Bewegung der Lebensmittelscheiben in die Hauptförderrichtung jedoch erschweren, da die vom Bandförderer zur Faltung quer über die Rolle geführten Lebensmittelscheiben an der Rolle zumindest teilweise abgebremst würden. Zur Optimierung des Slicers bzw. zur Erzielung einer gesteigerten Energieeffizienz kann die Rolle insofern besonders bevorzugt drehbar an der Faltvorrichtung befestigt sein. Überdies kann der Zwischenriemen über die Rolle geführt und von dieser zumindest teilweise gespannt sein, um den Faltvorgang der Lebensmittelscheiben zu verbessern: der Zwischenriemen kann derart angeordnet sein, dass er sich entlang des Bandförderers erstreckt und eine Neigung gegenüber der Förderebene aufweist und so eine allmähliche Faltung der Lebensmittelscheiben während ihres Transports in die Hauptförderrichtung ermöglicht.

Gemäß einer bevorzugten Ausgestaltung der Erfindung ist vorgesehen, dass die Rolle in der Nichtgebrauchsstellung unterhalb und in der Arbeitsstellung oberhalb der Förderebene angeordnet ist, wobei der Schwenkbereich zwischen der Nichtgebrauchsstellung und der Arbeitsstellung sich im Wesentlichen auf 90° beläuft. Die Rolle kann während der Produktion der Scheiben in der Arbeitsstellung oberhalb der Förderebene angeordnet sein. Insbesondere bei Außerbetriebnahme des Slicers kann sie in die Nichtgebrauchsstellung unterhalb der Förderebene geschwenkt sein. Die Überführung der Rolle von der Nichtgebrauchsstellung in die Arbeitsstellung und vice versa kann entlang einer viertelbogenförmigen Bewegungsbahn der Rolle durch Schwenken erfolgen. Besonders bevorzugt ist ein Schwenkbereich von etwa 90°, da hierdurch Bewegungen der Rolle über ein notwendiges Maß hinaus vermieden werden. Denkbar sind jedoch - beispielsweise falls Konstruktionsgründe des Slicers dies erfordern - beliebige Schwenkbereiche.

Eine besonders bevorzugte Ausführungsform der Erfindung sieht vor, dass die Faltvorrichtung einen Hebel umfasst, welcher an einem ersten Ende schwenkbar gelagert ist und welcher an einem dem ersten Ende gegenüberliegenden zweiten Ende die Rolle aufweist, wobei der Hebel über das erste Ende an eine Schwenkachse angebunden ist, welche unterhalb und parallel zur Förderebene und senkrecht zur Hauptförderrichtung verläuft. Der Hebel kann als Zwischenglied zwischen einem Grundkörper der Faltvorrichtung und der Rolle eingesetzt werden. Der Hebel kann insbesondere zum Schwenken der Rolle von der Nichtgebrauchsstellung in die Arbeitsstellung und vice versa verwendet werden. Um eine präzise Drehbewegung des Hebels sicherzustellen, kann er eine als Führung fungierende bogenförmige Ausnehmung aufweisen, in die ein Bolzen hineinragt, wobei der Hebel relativ zum Bolzen bewegt werden kann. Das Schwenken des Hebels und damit einhergehend der am zweiten Ende angeordneten Rolle kann manuell um die Schwenkachse erfolgen. Denkbar ist auch die Verwendung eines im Grundkörper angeordneten Antriebs, insbesondere Elektromotors, zum automatischen Schwenken.

In einer bevorzugten Ausgestaltung der Erfindung ist vorgesehen, dass die Faltvorrichtung in ihrer Nichtgebrauchsstellung entlang einer Querrichtung, die parallel zur Förderebene und senkrecht zur Hauptförderrichtung verläuft, bewegbar ist. Denkbar ist eine Konfiguration, bei der der Grundkörper bewegbar gestaltet ist, um eine Umpositionierung der Faltvorrichtung zu ermöglichen. Durch die Bewegbarkeit der Faltvorrichtung insbesondere in die Querrichtung kann das Erfordernis, den Bandförderer elektronisch zu steuern und zu bewegen, entfallen.

Gemäß einer bevorzugten Ausgestaltung der Erfindung ist vorgesehen, dass der Bandförderer eine erste Umlenkachse und eine zweite Umlenkachse aufweist, wobei die Förderriemen jeweils um die erste Umlenkachse und um die zweite Umlenkachse geführt sind, wobei die zweite Umlenkachse entlang der Hauptförderrichtung stromabwärts der ersten Umlenkachse angeordnet ist. Die Förderriemen können als Flach-, Keil- oder Zahnriemen ausgebildet sein, um eine kraft- oder formschlüssige Verbindung zu den Umlenkachsen herzustellen und ihre Bewegungsenergie zum Transport der Lebensmittelscheiben weiterzuleiten. Eine der beiden Umlenkachsen kann angetrieben sein, während die andere mitläuft. Beide Umlenkachsen können den gleichen Durchmesser aufweisen oder konstruktionsbedingt unterschiedlich groß ausgebildet sein. Der Zwischenriemen kann ebenfalls um die beiden Umlenkachsen geführt sein.

Gemäß einer weiteren bevorzugten Ausgestaltung der Erfindung ist vorgesehen, dass die Faltvorrichtung in der Arbeitsstellung bezogen auf die Hauptförderrichtung näher an der zweiten Umlenkachse als an der ersten Umlenkachse angeordnet ist. Aus der genauen Position der Faltvorrichtung entlang der Hauptförderrichtung ergeben sich in einer Seitenansicht unterschiedliche Geometrien des über die Rolle geführten Zwischenriemens. Die genaue Konfiguration der Zwischenriemengeometrie wiederum kann die Geometrie der Lebensmittelscheiben bestimmen. Mittels des Zwischenriemens durch Anheben erzeugte Längsfalten in den Lebensmittelscheiben können wieder eliminiert werden, wenn die Faltvorrichtung mittig bezüglich der Länge des Bandförderers, d.h. symmetrisch, angeordnet wäre, da die im stromaufwärts der Faltvorrichtung erzeugte Wirkung stromabwärts der Faltvorrichtung rückgängig gemacht werden kann. Insofern kann die Faltvorrichtung für eine bleibende Längsfalte je Lebensmittelscheibe bevorzugt in der stromabwärts ausgebildeten Hälfte des Bandförderers angeordnet sein.

Vorzugsweise umfasst der Zwischenriemen einen ersten Abschnitt, der stromaufwärts von der Faltvorrichtung bezüglich der Hauptförderrichtung angeordnet ist, wobei der erste Abschnitt einen ersten Winkel mit der Förderebene einschließt, und einen zweiten Abschnitt, der stromabwärts von der Faltvorrichtung bezüglich der Hauptförderrichtung angeordnet ist, wobei der zweite Abschnitt einen zweiten Winkel mit der Förderebene einschließt, wobei der erste Winkel kleiner ist als der zweite Winkel. Eine näher an der zweiten Umlenkachse angeordnete Faltvorrichtung resultiert zwingenderweise darin, dass der erste Abschnitt länger ist als der zweite Abschnitt und der erste Winkel kleiner ist als der zweite Winkel. Ein kleinerer erster Winkel, das einer geringeren Neigung des ersten Abschnitts entspricht, impliziert ein allmählicheres, gleichsam gemächlicheres Anheben der Lebensmittelscheiben. Lebensmittelscheiben, die unmittelbar oberhalb der Rolle, d.h. an der höchstmöglichen Stelle während ihres Transports angelangt sind, können aufgrund der steileren Ausbildung des zweiten Abschnitts bzw. des größeren zweiten Winkels zumindest teilweise und kurzzeitig den Kontakt zum Zwischenriemen verlieren und gleichsam abspringen. Beim Auftreffen der Lebensmittelscheiben auf dem Bandförderer kann eine zumindest teilweise vertikal ausgerichtete Längsfalte verbleiben.

Eine bevorzugte Ausführungsform der Erfindung sieht vor, dass ein dem Bandförderer bezüglich der Hauptförderrichtung nachgeschalteter weiterer Bandförderer eine geringere Fördergeschwindigkeit aufweist als der Bandförderer. Infolge der geringeren Fördergeschwindigkeit des weiteren Bandförderers können Lebensmittelscheiben abgebremst werden, wodurch zusätzlich zu der Längsfalte der Lebensmittelscheiben Querfalten entstehen können, die den Lebensmittelscheiben eine für die erfindungsgemäße Vorrichtung charakteristische Ausgestaltung verleihen können.

Offenabrt wird ferner ein Verfahren zum Betrieb einer Vorrichtung nach einem der vorangegangenen Ausgestaltungen, wobei eine Lebensmittelscheibe mittels der Faltvorrichtung angehoben und gefaltet wird. Zum Anheben sowie zur Faltung kann insbesondere ein erfindungsgemäßer Zwischenriemen verwendet werden. Zur Erzeugung einer Längs- und mindestens einer Querfalte kann neben dem Bandförderer der weitere Bandförderer eingesetzt werden.

Gemäß einer besonders bevorzugten Ausgestaltung ist vorgesehen, dass die Faltung der Lebensmittelscheibe folgende Schritte umfasst: in einem ersten Schritt läuft die Lebensmittelscheibe auf den ersten Abschnitt des Zwischenriemens auf, in einem zweiten Schritt wird diese Lebensmittelscheibe dann mittig von dem Zwischenriemen angehoben, in einem dritten Schritt passiert die mittig angehobene Lebensmittelscheibe sodann die Rolle und hebt zumindest kurzzeitig und/oder teilweise von dem Zwischenriemen ab und in einem vierten Schritt landet die Lebensmittelscheibe zumindest teilweise gefaltet stromabwärts der Rolle auf dem Bandförderer oder einem nachgeschalteten weiteren Bandförderer. Mit Hilfe dieses Verfahrens können Lebensmittelscheiben mit einer neuartigen Konfiguration, die sowohl Längs- als auch Querfalten aufweist, hergestellt werden.

Eine bevorzugte Ausgestaltung sieht vor, dass der weitere Bandförderer mit einer geringeren Fördergeschwindigkeit betrieben wird als der Bandförderer. Aufgrund der geringeren Fördergeschwindigkeit des weiteren Bandförderers können Lebensmittelscheiben abgebremst werden, wodurch zumindest eine Querfalte je Lebensmittelscheibe ausgebildet wird, wobei die Querfalte senkrecht zur Hauptförderrichtung und Längsfalte verläuft.

### Kurze Beschreibung der Zeichnungen

- **Figur 1**: zeigt eine perspektivische Ansicht eines Bandförderers einer erfindungsgemäßen Vorrichtung gemäß einer beispielhaften Ausführungsform.
- **Figur 2**: zeigt eine perspektivische Detailansicht des Bandförderers aus Figur 2 mit nur einem Förderriemen.

### Ausführungsformen der Erfindung

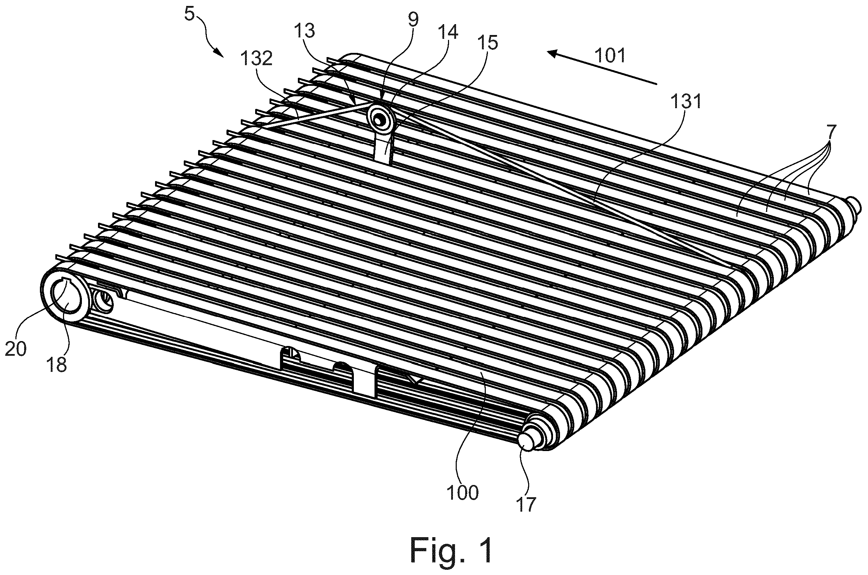

In **Figur 1** ist ein Bandförderer 5 einer erfindungsgemäßen Vorrichtung 1 dargestellt, der in der Figur 1 nicht abgebildete Lebensmittelscheiben 3 in die Hauptförderrichtung 101 transportiert. Der Bandförderer 5 weist mehrere, hier einundzwanzig, beabstandete und parallel angeordnete Förderriemen 7 auf. Die Förderriemen 7 sind als Flachriemen ausgeführt und definieren eine Förderebene 100, auf der die Lebensmittelscheiben 3 aufliegen können. Die Förderriemen 7 sind jeweils um eine erste Umlenkachse 17 und eine parallel zur ersten Umlenkachse 17 angeordnete zweite Umlenkachse 18 geführt.

Die erste Umlenkachse 17 ist massiv ausgebildet und weist einen geringeren Außendurchmesser als die zweite Umlenkachse 18. Die erste Umlenkachse 17 rotiert lediglich mit, wohingegen die zweite Umlenkachse 18 als Hohlachse ausgeführt ist und die Förderriemen 7 antreibt. Die Antriebsenergie wird durch eine Antriebswelle bereitgestellt, welche in der als Hohlachse ausgebildeten zweiten Umlenkachse 18 steckt und mit dieser eine Welle-Nabe-Verbindung bildet. Das Drehmoment der Antriebswelle wird über eine in einer Nut 20 der zweiten Umlenkachse 18 angeordnete Passfeder übertragen.

Die Vorrichtung 1 weist eine Faltvorrichtung 9 auf, die in zwei unterschiedlichen Stellungen, der Arbeits- und Nichtgebrauchsstellung, angeordnet sein kann., wobei sich ein Schwenkbereich zwischen den beiden Stellungen auf 90° beläuft. In der Figur 1 ist die Faltvorrichtung in einer Arbeitsstellung dargestellt. In der Arbeitsstellung ist die Faltvorrichtung 9 teilweise unterhalb und teilweise oberhalb der Förderebene 100 angeordnet. Sie umfasst eine Rolle 14, die an einem Hebel 15 drehbar gelagert ist und in die Förderebene 100 vorsteht. Ein Zwischenriemen 13, der als umlaufender Riemen konfiguriert ist, ist über eine in Umfangsrichtung der Rolle 14 ausgebildete Vertiefung der Rolle 14 geführt. Der Zwischenriemen 13 ist ferner über die beiden Umlenkachsen 17, 18 geführt und wird mithin von der zweiten Umlenkachse 18 mit angetrieben. Die Faltvorrichtung kann vollständig unterhalb der Förderebene, in die Nichtgebrauchsstellung geklappt bzw. geschwenkt werden.

Die Verwendung eines Zwischenriemens kann sicherstellen, dass die Faltvorrichtung ihre Wirkung über eine größere Länge des Bandförderers entfalten kann und die Faltung folglich nicht an einer fixen Position des Bandförderers impulsartig erfolgt. Durch das Ausbleiben regelmäßiger Bewegungen bzw. zyklischer Schwingungen der Faltvorrichtung kann sowohl die Steuerung der Faltvorrichtung trivialer konfiguriert sein als auch Energie beim Betrieb des Slicers eingespart werden.

Denkbar ist, dass die Faltvorrichtung mittels eines entsprechenden Antriebs insbesondere zwischen zwei aufeinanderfolgenden Chargen an Lebensmitteln durch Bewegung in und quer zur Hauptförderrichtung an unterschiedlichen Positionen des Bandförderers angeordnet werden kann, um erforderlichenfalls fertigungsspezifische Anforderungen zu erfüllen. Die Umpositionierung relativ zum Bandförderer kann hierbei unabhängig von weiteren Slicerkomponenten durchgeführt werden.

Eine Lebensmittelscheibe 3 gelangt bei ihrem Transport in die Hauptförderrichtung 101 zunächst auf einen ersten Abschnitt 131 des Zwischenriemens 13. Bei fortschreitender Förderung der Lebensmittelscheibe 3 wird sie sukzessive vom Zwischenriemen 13 etwa mittig angehoben, wodurch sich in der Lebensmittelscheibe 3 eine parallel zur Hauptförderrichtung 101 angeordnete Längsfalte bildet. Mit anderen Worten ragen im Zuge der Anhebung immer größere Abschnitte der Lebensmittelscheibe 3 beidseitig des Zwischenriemens 13 herab bis die Lebensmittelscheibe 3 vollständig vom Bandförderer 5 abgehoben ist und auf dem ersten Abschnitt 131 des Zwischenriemens 13 gleichsam durchhängt. Nach Passieren der Rolle 14 hebt die Lebensmittelscheibe 3 zumindest kurzzeitig und/oder teilweise von dem Zwischenriemen 13 ab und landet stromabwärts der Rolle 14 auf dem Bandförderer 5 oder einem nachgeschalteten weiteren Bandförderer 5'. Der weitere Bandförderer 5' weist eine geringere Fördergeschwindigkeit auf als der Bandförderer 5, sodass die Lebensmittelscheibe 3 abgebremst wird und zusätzlich zur Längsfalte mehrere Querfalten entstehen.

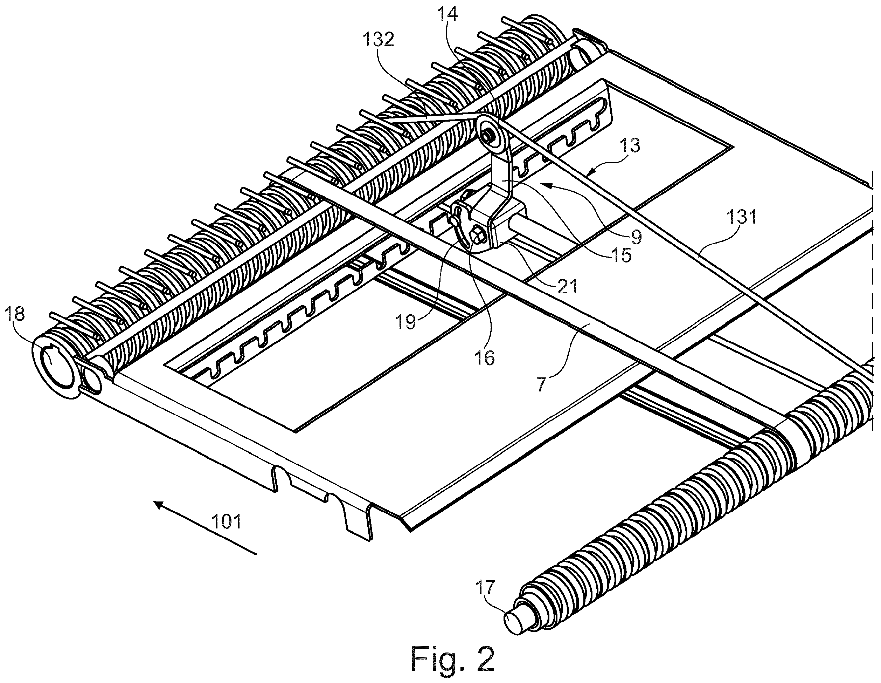

In **Figur 2** ist ein Ausschnitt des Bandförderers 5 aus der Figur 1 unter Ausblendung aller Förderriemen 7 bis auf einen dargestellt. Die Faltvorrichtung 9 weist einen Grundkörper 21 auf. Der Hebel 15 ist an einem ersten Ende mit dem Grundkörper 21 verbunden und kann um eine Schwenkachse 16 umgeschwenkt werden, wobei der Grundkörper 21 einen Elektromotor zum Schwenken des Hebels 15 und der Rolle 14 umfassen kann. An einem zweiten Ende des Hebels 15 ist die besagte Rolle 14 drehbar befestigt.

Das Schwenken ermöglicht die Überführung der Faltvorrichtung 9 von der Arbeitsstellung in die Nichtgebrauchsstellung und vice versa, wobei die Faltvorrichtung 9 in der Nichtgebrauchsstellung vollständig unterhalb der Förderebene 100 angeordnet ist. Für ein präzises Schwenken ist am Hebel 15 eine Ausnehmung 19 ausgebildet, durch welche ein Bolzen hindurchragt. Die Ausnehmung 19 dient beim Schwenken des Hebels 15 als Führung.

### Bezugszeichenliste

- 1: Vorrichtung
- 3: Lebensmittelscheiben
- 5: Bandförderer
- 5': weiterer Bandförderer
- 7: Förderriemen
- 9: Faltvorrichtung
- 13: Zwischenriemen
- 14: Rolle
- 15: Hebel
- 16: Schwenkachse
- 17: erste Umlenkachse
- 18: zweite Umlenkachse
- 19: Ausnehmung
- 20: Nut
- 21: Grundkörper
- 100: Förderebene
- 101: Hauptförderrichtung
- 102: Querrichtung
- 131: erster Abschnitt des Zwischenriemens
- 132: zweiter Abschnitt des Zwischenriemens

- α: erster Winkel
- β: zweiter Winkel

## Patentansprüche

1. Vorrichtung (1) zum Transportieren von Lebensmittelscheiben (3) mit einem Bandförderer (5), der eine Förderebene (100) definiert, in welcher Lebensmittelscheiben (3) entlang einer Hauptförderrichtung (101) transportiert werden, und wenigstens zwei Förderriemen (7) umfasst, wobei die Vorrichtung (1) eine Faltvorrichtung (9) aufweist, welche zwischen den Förderriemen (7) in die Förderebene (100) vorsteht, **dadurch gekennzeichnet, dass** zwischen den Förderriemen (7) ein Zwischenriemen (13) vorgesehen ist, welcher von der Faltvorrichtung (9) über die Förderebene (100) angehoben wird, wobei die Faltvorrichtung (9) eine Rolle (14) umfasst, auf welcher der Zwischenriemen (13) abläuft.

2. Vorrichtung (1) nach einem der vorhergehenden Ansprüche, wobei die Faltvorrichtung (9) in eine Arbeitsstellung, in welcher die Faltvorrichtung (9) zwischen den Förderriemen (7) in die Förderebene (100) vorsteht, und eine Nichtgebrauchsstellung, in welcher die Faltvorrichtung (9) unterhalb der Förderebene (100) angeordnet ist, bewegbar und verschwenkbar ist.

3. Vorrichtung (1) nach Anspruch 1, wobei die Rolle (14) in der Nichtgebrauchsstellung unterhalb und in der Arbeitsstellung oberhalb der Förderebene (100) angeordnet ist, wobei der Schwenkbereich zwischen der Nichtgebrauchsstellung und der Arbeitsstellung sich auf 90° beläuft.

4. Vorrichtung (1) nach einem der vorhergehenden Ansprüche, wobei die Faltvorrichtung (9) einen Hebel (15) umfasst, welcher an einem ersten Ende schwenkbar gelagert ist und welcher an einem dem ersten Ende gegenüberliegenden zweiten Ende die Rolle (14) aufweist, wobei der Hebel (15) über das erste Ende an eine Schwenkachse (16) angebunden ist, welche unterhalb und parallel zur Förderebene (100) und senkrecht zur Hauptförderrichtung (101) verläuft.

5. Vorrichtung (1) nach einem der vorhergehenden Ansprüche, wobei die Faltvorrichtung (9) in ihrer Nichtgebrauchsstellung entlang einer Querrichtung (102), die parallel zur Förderebene (100) und senkrecht zur Hauptförderrichtung (101) verläuft, bewegbar ist.

6. Vorrichtung (1) nach einem der vorhergehenden Ansprüche, wobei der Bandförderer (5) eine erste Umlenkachse (17) und eine zweite Umlenkachse (18) aufweist, wobei die Förderriemen (7) jeweils um die erste Umlenkachse (17) und um die zweite Umlenkachse (18) geführt sind, wobei die zweite Umlenkachse (18) entlang der Hauptförderrichtung (101) stromabwärts der ersten Umlenkachse (17) angeordnet ist.

7. Vorrichtung (1) nach Anspruch 5, wobei die Faltvorrichtung (7) in der Arbeitsstellung bezogen auf die Hauptförderrichtung (101) näher an der zweiten Umlenkachse (18) als an der ersten Umlenkachse (17) angeordnet ist.

8. Vorrichtung (1) nach einem der vorhergehenden Ansprüche, wobei der Zwischenriemen (13) einen ersten Abschnitt (131) umfasst, der stromaufwärts von der Faltvorrichtung (9) bezüglich der Hauptförderrichtung (101) angeordnet ist, wobei der erste Abschnitt (131) einen ersten Winkel (α) mit der Förderebene einschließt, und einen zweiten Abschnitt (132), der stromabwärts von der Faltvorrichtung (9) bezüglich der Hauptförderrichtung (101) angeordnet ist, wobei der zweite Abschnitt einen zweiten Winkel (β) mit der Förderebene (100) einschließt, wobei der erste Winkel (α) kleiner ist als der zweite Winkel (β).

9. Vorrichtung (1) nach einem der vorhergehenden Ansprüche, wobei ein dem Bandförderer (5) bezüglich der Hauptförderrichtung (101) nachgeschalteter weiterer Bandförderer (6) eine geringere Fördergeschwindigkeit aufweist als der Bandförderer (5).

## Claims

1. Device (1) for transporting food slices (3) with a belt conveyor (5) defining a conveying plane (100) in which food slices (3) are transported along a main conveying direction (101), and at least two conveyor belts (7), wherein that the device (1) has a folding device (9) which protrudes into the conveying plane (100) between the conveyor belts (7), **characterized in that** conveyor belts (7) an intermediate belt (13) is provided which is lifted by the folding device (9) above the conveyor plane (100), wherein the folding device (9) comprises a roller (14) on which the intermediate belt (13) runs.

2. Device (1) according to one of the preceding claims, wherein the folding device (9) is movable and pivotable into a working position in which the folding device (9) protrudes into the conveyor plane (100) between the conveyor belts (7), and a non-use position in which the folding device (9) is located below the conveyor plane (100).

3. Device (1) according to claim 1, wherein the roller (14) is arranged in the non-use position below and, in the working position, above the conveyor level (100), wherein the swivel range between the non-use position and the working position is 90°.

4. Device (1) according to one of the preceding claims, wherein the folding device (9) comprises a lever (15) which is pivotably mounted at a first end and which has the roller (14) at a second end opposite the first end, wherein the lever (15) is pivotable about the first end a pivot axis (16) which extends below and parallel to the conveying plane (100) and perpendicular to the main conveying direction (101).

5. Device (1) according to one of the preceding claims, wherein the folding device (9) in its non-use position along a transverse direction (102), which runs parallel to the conveying plane (100) and perpendicular to the main conveying direction (101).

6. Device (1) according to one of the preceding claims, wherein the belt conveyor (5) has a first deflection shaft (17) and a second deflection shaft (18), wherein the conveyor belts (7) are each guided around the first deflection shaft (17) and around the second deflection shaft (18), wherein the second deflection shaft (18) is guided along the main conveying direction (101) downstream of the first deflection axis (17).

7. Device (1) according to claim 5, wherein the folding device (7) is arranged closer to the second deflection axis (18) than to the first deflection axis (17) in the working position relative to the main conveying direction (101).

8. Device (1) according to one of the preceding claims, wherein the intermediate belt (13) comprises a first section (131) arranged upstream of the folding device (9) with respect to the main conveying direction (101), wherein the first section (131) forms a first angle (a) with the conveying plane, and a second section (132) arranged downstream of the folding device (9) with respect to the main conveying direction (101), the second section forming a second angle (β) with the conveying plane (100), the first angle (a) being smaller than the second angle (β).

9. Device (1) according to one of the preceding claims, wherein a further belt conveyor (6) connected downstream of the belt conveyor (5) with respect to the main conveying direction (101) has a lower conveying speed than the belt conveyor (5).

## Revendications

1. Dispositif (1) pour transporter des tranches de produits alimentaires (3) avec un convoyeur à bande (5) qui définit un plan de transport (100) dans lequel des tranches de produits alimentaires (3) sont transportées le long d'une direction de transport principale (101), et au moins deux courroies de transport (7), en ce que le dispositif (1) comporte un dispositif de pliage (9) qui fait saillie dans le plan de transport (100) entre les courroies de transport (7), **caractérisé en ce qu'** entre les les courroies de transport (7) est prévue une courroie intermédiaire (13) qui est soulevée par le dispositif de pliage (9) au-dessus du plan de transport (100), le dispositif de pliage (9) comprenant un rouleau (14) sur lequel défile la courroie intermédiaire (13).

2. Dispositif (1) selon l'une des revendications précédentes, le dispositif de pliage (9) peut être amené dans une position de travail dans laquelle le dispositif de pliage (9) fait saillie dans le plan de transport (100) entre les courroies de transport (7), et dans une position de non-utilisation dans laquelle le dispositif de pliage (9) est disposé en dessous du plan de transport (100)

3. Dispositif (1) selon la revendication 1, le rouleau (14) étant disposé en position de non-utilisation est disposé en dessous et, dans la position de travail, au-dessus du plan de transport (100), la plage de pivotement entre la position de non-utilisation et la position de travail s'étendant sur 90°.

4. Dispositif (1) selon l'une des revendications précédentes, le dispositif de pliage (9) comprend un levier (15) qui est monté de manière pivotante à une première extrémité et qui comporte, à une deuxième extrémité opposée à la première extrémité, le rouleau (14), le levier (15) s'étendant au-delà de la première extrémité surun axe de pivotement (16) qui s'étend en dessous et parallèlement au plan de transport (100) et perpendiculairement à la direction principale de transport (101).

5. Dispositif (1) selon l'une des revendications précédentes, le dispositif de pliage (9) étant replié dans sa position de non-utilisation le long d'une direction transversale (102), qui s'étend parallèlement au plan de transport (100) et perpendiculairement à la direction de transport principale (101).

6. Dispositif (1) selon l'une des revendications précédentes, le convoyeur à bande (5) comportant un premier axe de renvoi (17) et un deuxième axe de renvoi (18), les courroies de convoyage (7) étant guidées respectivement autour du premier axe de renvoi (17) et autour du deuxième axe de renvoi (18), le deuxième axe de renvoi (18) s'étendant le long de la direction de transport principale (101) en aval du premier axe de renvoi (17).

7. Dispositif (1) selon la revendication 5, le dispositif de pliage (7) étant disposé en position de travail plus près du deuxième axe de renvoi (18) que du premier axe de renvoi (17) par rapport à la direction de transport principale (101).

8. Dispositif (1) selon l'une des revendications précédentes, dans lequel la courroie intermédiaire (13) comprend une première partie (131) qui est disposée en amont du dispositif de pliage (9) par rapport à la direction de transport principale (101), la première partie (131) formant un premier angle (a) avec le plan de transport, et une deuxième partie (132) disposée en aval du dispositif de pliage (9) par rapport à la direction de transport principale (101), la deuxième partie formant un deuxième angle (§) avec le plan de transport (100), le premier angle (a) étant plus petit que le deuxième angle (§).

9. Dispositif (1) selon l'une des revendications précédentes, dans lequel un autre convoyeur à bande (6) monté en aval du convoyeur à bande (5) par rapport à la direction de transport principale (101) présente une vitesse de transport inférieure à celle du convoyeur à bande (5).
